# FASCICULE DE BREVET EUROPEEN

(11) **EP 0 340 161 B1**
(45) Date de publication et mention de la délivrance du brevet: **22.09.1993**
(21) Numéro de dépôt: 89810233.0
(22) Date de dépôt: 28.03.1989
(51) Int. Cl.: G02C 5/22

(54) **Charnière à ressort pour monture de lunettes**
Elastisches Scharnier für ein Brillengestell
Elastic hinge for spectacle frame

(30) Priorité: 29.04.1988 CH 1608/88
(43) Date de publication de la demande: 02.11.1989
(73) Titulaire: LN INDUSTRIES S.A., 1211 Genève 8 (CH); Soc. Vve H. CHEVASSUS SA, F-39402 MorezCedex (FR)
(72) Inventeur: Guy, Gabriel, F-74140 Douvaine (FR); Zellweger, Conrad, CH-1224 Chene-Bougeries (CH)
(74) Mandataire: ARDIN & CIE S.A.

(56) Documents cités:
- EP-A- 0 006 075
- EP-A- 0 096 928
- EP-A- 0 166 822
- FR-A- 2 466 788
- FR-A- 2 521 310
- FR-A- 2 609 816

## Description

On connaît déjà des charnières à ressort pour monture de lunettes, comprenant deux charnons, dont l'un est destiné à être fixé à la partie face de la monture, l'autre charnon étant destiné à être relié à une branche, et un élément élastique pour relier ledit autre charnon à ladite branche, cet élément comprenant un boîtier s'étendant suivant un sens longitudinal par rapport à la branche et étant ouverte à l'une de ses extrêmités, une tige étant solidaire dudit autre charnon à l'une de ses extrémités et à l'autre extrémité ayant une portion d'une section droite plus grande que celle de la tige et étant destinée à être montée à coulissement dans ledit boîtier, un ressort de compression entourant ladite tige, une des extrémités dudit ressort prenant appui contre ladite portion et une pièce entourant ladite tige, ladite pièce étant destinée à être introduite dans ledit boîtier, à être rendue solidaire de la paroi interne de celui-ci et à constituer une surface d'appui pour l'autre extrémité dudit ressort.

Une charnière correspondant à ce genre est décrite dans le brevet EP 0.306.446 et comprend une surface d'appui solidaire du boîtier constituée par une plaquette introduite latéralement par une fente de ce boîtier. La tige est constituée par une vis introduite par l'arrière du boîtier, traversant la plaquette par un trou et vissée dans le charnon. Le montage de cette charnière est relativement compliqué puisque des pièces sont introduites des deux côtés du boîtier.

L'invention a pour but de faciliter des opérations de montage des charnières de ce type tout en rendant le montage très sûr et fiable à longue échéance. A cet effet, la charnière faisant l'objet de l'invention est caractérisée par les caractéristiques exprimées dans les revendications indépendantes 1 et 2.

A titre indicatif, nous signalons que le rapport de recherche européen cite en tant que document intercalaire la demande FR 2.609.816 publiée après la date de priorité du présent dépôt et qui révèle une pièce engagée en force dans le boîtier et retenue par friction dans ce dernier.

Le dessin annexé représente schématiquement et à titre d'exemple plusieurs formes d'exécution de la charnière objet de l'invention.

La figure 1 est une vue en coupe de la charnière selon la première forme d'exécution après son montage.

Les figures 2,3 et 4 sont des vues montrant les opérations de montage de cette charnière.

La figure 5 représente en coupe une deuxième forme d'exécution.

Les figures 6 à 11 montrent des variantes d'exécution.

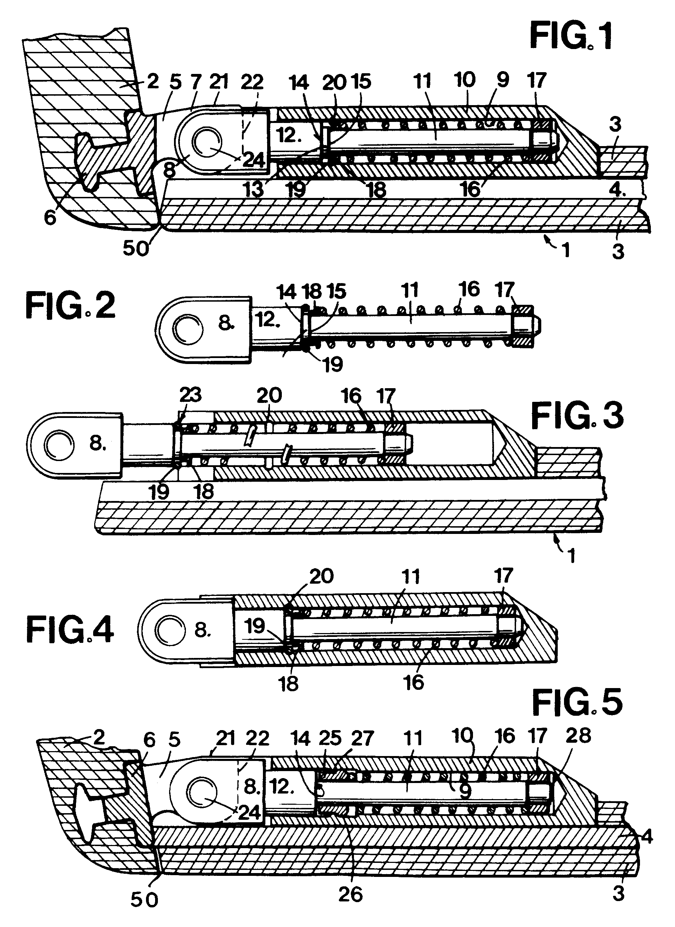

La charnière illustrée à la figure 1 relie une branche 1 et la monture frontale d'une paire de lunettes. La branche 1 comprend une partie en résine synthétique 3 dans laquelle se trouve une armature métallique 4.

Un charnon femelle 5 présente une portion de fixation 6 noyée dans la partie frontale 2. Il est muni de deux pattes, dont une seule 7 est visible au dessin, entre lesquelles est engagé un charnon mâle 8 monté à coulissement dans un alésage cylindrique 9 d'un boîtier 10 qui est fixé à l'armature métallique 4 par exemple par soudage.

Le charnon 8 est venu d'une pièce avec une tige 11 qui présente, du côté de ce charnon, deux portions 12 et 13 déterminant deux épaulements 14 et 15. La tige 11 passe à l'intérieur d'un ressort hélicoïdal 16, dont la portion arrière prend appui contre un collier 17 solidaire de cette tige et dont le diamètre extérieur correspond au diamètre intérieur de l'alésage cylindrique 9 pour pouvoir coulisser dans celui-ci. L'autre extrémité du ressort 16 prend appui contre une pièce annulaire 18 qui présente une partie engagée dans un anneau élastique fendu 19 qui est engagé partiellement dans une gorge 20 prévue dans la paroi interne du boîtier 10. Comme on le voit, la pièce annulaire 18 présente une nervure circulaire qui forme une surface d'appui pour le ressort 16.

Il y a encore lieu de remarquer que les pattes 7 du charnon 5 présentent deux portions rectilignes 21 et 22 contre lesquelles l'extrémité du boîtier 10 prend appui sous l'effet de la force exercée par le ressort 16 pour déterminer, comme cela est bien connu en soi, les positions d'ouverture et de fermeture des branches de lunettes. Cette charnière permet à la branche de dépasser élastiquement sa position d'ouverture normale. En effet, l'extrémité avant de la branche 3 vient buter en 50 contre la partie frontale 2 et la branche peut pivoter autour de ce point 50 contre la force élastique du ressort 16 qui est transmise par le charnon 8 sur le charnon 5.

La charnière représentée est très avantageuse, car elle peut être prémontée comme le montre la figure 2. Sur la tige 11 on introduit depuis l'arrière l'anneau élastique fendu 19 qui est retenu vers l'avant par l'épaulement 14. Ensuite on place la pièce annulaire 18 qui peut buter contre l'épaulement 15, on enfile le ressort 16 sur la tige et on le comprime en posant le collier 17 qui peut être simplement forcé sur l'extrémité arrière de la tige 11 ou encore être retenu sur celle-ci par tout moyen approprié tel que soudure, collage, rivetage.

Ensuite la tige 11, portant l'anneau élastique fendu 19, la pièce annulaire 18, le ressort 16 et le collier 17, est introduite dans l'alésage 9, comme montré à la figure 3. L'extrémité ouverte de l'alésage 9 présente un biseau 23 formant une rampe, de sorte qu'en poussant davantage la tige 11 dans le boîtier 10, l'anneau fendu 19 se resserre radialement pour pénétrer dans l'alésage 9.

La tige 11 est ensuite poussée jusqu'au fond de l'alésage 9, comme le montre la figure 4 et l'anneau fendu est alors situé en regard de la gorge 20. Par suite de son élasticité, il s'étend radialement et pénètre particulièrement dans la gorge 20. Lorsqu'on retire légèrement la tige 11 vers l'extérieur, la pièce annulaire 18 se déplace et pénètre à l'intérieur de l'anneau 20, c'est-àdire dans la position illustrée à la figure 1. Ensuite, le charnon 8 est relié de façon habituelle au charnon 5 par l'intermédiaire d'une vis pivot 24.

Dans la forme d'exécution selon la figure 5, les pièces correspondant à la première forme d'exécution sont munies des mêmes chiffres de référence. Les différences essentielles par rapport à la figure 1 résident dans le fait que l'anneau 19 et la pièce annulaire 18 sont remplacés par une bague 25 en résine synthétique présentant une élasticité suffisante pour pouvoir pénétrer à l'intérieur d'une nervure 26 dans laquelle elle vient se crocher par un épaulement 27. De ce fait, la tige 11 ne présente plus qu'une seule portion 12 de plus grand diamètre, la portion 13 de la première forme d'exécution étant devenue inutile. On peut encore remarquer que dans cette deuxième forme d'exécution, le collier 17 est retenu sur la tige 11 par un rivetage obtenu par écrasement de l'extrémité arrière de cette tige pour former un rebord 28.

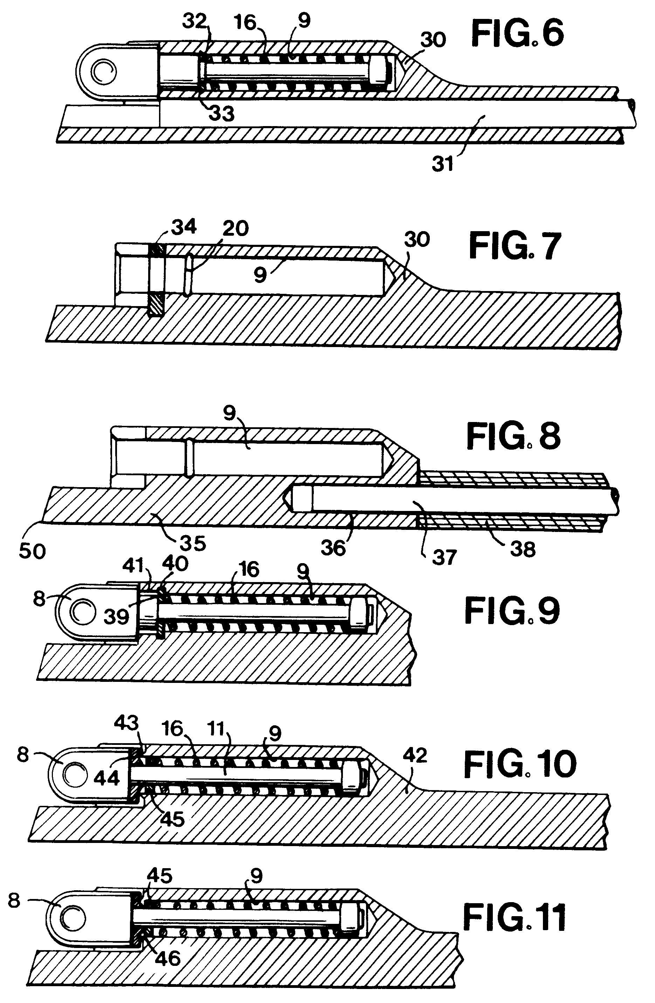

La figure 6 est une illustration partielle d'une variante dans laquelle l'alésage 9 de la charnière est réalisée directement dans une branche en matière plastique. Cette branche présente une armature métallique 31. La pièce de retenue du ressort 16 est constituée par une rondelle 32, dont le pourtour est tronconique, de façon à obtenir une arête annulaire 33 de diamètre légèrement supérieur à celui de l'alésage 9. Dans cette exécution, on introduit à force l'ensemble élastique et la rondelle 32 déforme élastiquement la paroi de l'alésage 9 jusqu'à ce qu'elle arrive dans la position illustrée au dessin. Sous la poussée exercée par le ressort 16 sur la rondelle 32, l'arête 33 de cette dernière s'incruste dans la matière plastique et retient l'ensemble dans la position désirée.

La figure 7 représente une variante d'exécution dans laquelle la branche 30 ne comporte pas d'armature métallique, tandis que l'extrémité ouverte de l'alésage 9 est constituée par une plaquette 34 en matière plus dure que celle de la branche 30 pour éviter l'usure par les portions 21 et 22 des pattes 7. Cette plaquette 34 peut être par exemple en acier inoxydable, en maillechort ou encore en Delrin.

La figure 8 représente une partie de charnière en matière plastique moulée, constituant le boîtier 35, présentant deux évidements borgnes, parallèle entre eux et s'ouvrant respectivement sur les extrémités opposées de ce boîtier 35. L'un de ces évidements est constitué par l'alésage 9 destiné à recevoir la partie élastique de la charnière, tandis que l'autre évidement est un trou borgne 36 destiné à recevoir l'extrémité d'une tige 37 constituant l'armature d'une branche 38. La fixation de cette armature 37 dans le trou 36 peut être réalisée par exemple par collage. Le boîtier 35 présente une portion d'extrémité 50 destinée à prendre appui contre la partie frontale de la monture pour déterminer la position d'ouverture normale de la branche.

La figure 9 représente une variante dans laquelle le ressort 16 est retenu par une rondelle 39, dont le pourtour est engagé dans une gorge circulaire 40 ménagée dans l'alésage 9. Pour permettre le montage de l'ensemble élastique dans l'alésage 9, la rondelle 39 est initialement conique, de façon que son diamètre extérieure soit plus petit que celui de la partie 41 de l'alésage 9. L'ensemble peut donc être introduit dans cet alésage et lorsque la périphérie de la rondelle 39 vient buter contre l'épaulement annulaire qui est constitué par un bord de la gorge 40, on exerce sur le charnon 8 une poussée suffisante pour déformer la rondelle conique, afin de la transformer en rondelle plate engagée dans la gorge 40.

Les figures 10 et 11 montrent une variante dans laquelle l'alésage 9 est ménagé dans une extrémité d'une branche métallique 42. Comme on le voit à la figure 10, l'alésage 9 se termine à son extrémité ouverte par une nervure annulaire 43 contre laquelle vient s'appuyer une rondelle 44 en matière dure disposée sur la tige 11 et formant outil de sertissage. La tige porte également une rondelle 45 servant d'appui au ressort 16. Lors du montage de l'élément élastique, on exerce une pression suffisante sur le charnon 8 pour déformer la nervure 43 et réaliser un sertissage 46 retenant la rondelle 45 à l'intérieur de l'alésage 9.

On peut bien entendu prévoir de nombreuses variantes d'exécution. Ainsi, dans une construction dérivée de la figure 9, le boîtier pourrait présenter un évidement de section rectangulaire et la rondelle 39 pourrait être remplacée par une plaquette courbée et destinée à être redressée pour s'engager dans des encoches.

## Revendications

1. Charnière à ressort pour monture de lunettes, comprenant deux charnons (5, 8), dont l'un (5) est destiné a être fixé à la partie face (2) de la monture, l'autre charnon (8) étant destiné à être relié à une branche (1), et un élément élastique pour relier ledit autre charnon (8) à ladite branche (1), cet élément comprenant un boîtier (10) s'étendant suivant un sens longitudinal par rapport à la branche (1) et étant ouvert à l'une de ses extrémités, une tige (11) étant solidaire dudit autre charnon (8) à l'une de ses extrémités et à l'autre extrémité ayant une portion (17) d'une section droite plus grande que celle de la tige et étant destinée à être montée à coulissement dans ledit boîtier (10), un ressort de compression (16) entourant ladite tige (11), une des extrémités dudit ressort prenant appui contre ladite portion (17) et une pièce (19; 25; 32; 39) entourant ladite tige (11), ladite pièce étant destinée à être introduite dans ledit boîtier, à être rendue solidaire de la paroi interne de celui-ci et à constituer une surface d'appui pour l'autre extrémité dudit ressort, caractérisée en ce que ladite pièce (19; 25; 32; 39) a une section droite conforme à celle dudit boîtier (10) pour permettre l'introduction dans ledit boîtier (10) suivant ledit sens longitudinal, la paroi interne (9) du boîtier (10) présentant, dans un plan sensiblement orthogonal audit sens longitudinal, un décrochement (20, 26, 40) sous forme d'une rainure ou d'un épaulement destiné à coopérer avec ladite pièce, et en ce que ladite pièce (19; 25; 32; 39) et/ou le boîtier (10) sont en matériau déformable, de sorte que ladite pièce et/ou le boîtier soient déformés pendant ou après l'introduction de l'ensemble tige, ressort et pièce, la déformation étant telle que la pièce est rendue solidaire dudit décrochement.

2. Charnière à ressort pour monture de lunettes, comprenant deux charnons (5, 8), dont l'un (5) est destiné à être fixé à la partie face (2) de la monture, l'autre charnon (8) étant destiné à être relié à une branche (1), et un élément élastique pour relier ledit autre charnon (8) à ladite branche (1), cet élément comprenant un boîtier (10) s'étendant suivant un sens longitudinal par rapport à la branche (1) et étant ouvert à l'une de ses extrémités, une tige (11) étant solidaire dudit autre charnon (8) à l'une de ses extrémités et à l'autre extrémité ayant une portion (17) d'une section droite plus grande que celle de la tige et étant destinée à être montée à coulissement dans ledit boîtier (10), un ressort de compression (16) entourant ladite tige (11), une des extrémités dudit ressort prenant appui contre ladite portion (17), et une pièce (45) entourant ladite tige (11), ladite pièce étant destinée à être introduite dans ledit boîtier, à être rendue solidaire de la paroi de celui-ci et à constituer une surface d'appui pour l'autre extrémité dudit ressort, caractérisée en ce que ladite pièce (45) a une section droite conforme à celle dudit boîtier pour permettre l'introduction dans ledit boîtier (10) suivant ledit sens longitudinal, et en ce que ledit boîtier comporte une portion (43) en matériau déformable à son extrémité ouverte qui est destinée à être déformée pendant l'introduction de l'ensemble tige (11), ressort (16) et pièce (45), la déformation étant telle qu'un épaulement est formé contre lequel ladite pièce (45) prend appui.

3. Charnière selon la revendication 1, caractérisée en ce que le décrochement (27) est obtenu par usinage.

4. Charnière selon la revendication 1, caractérisée en ce que le décrochement est obtenu par déformation de la paroi intérieure (9) du boîtier.

5. Charnière selon l'une des revendications 1,3 ou 4, caractérisée en ce que la paroi interne du boîtier présente une encoche (20,26) dans laquelle est engagée une partie de ladite pièce (19,25) qui est élastique.

6. Charnière selon la revendication 5, caractérisée en ce que la paroi interne (9) du boîtier est cylindrique, circulaire, l'encoche étant formée par une gorge (20) de cette paroi interne, la pièce élastique comprenant un anneau élastique fendu (19) et engagé dans ladite gorge (20) et entourant la tige (11).

7. Charnière selon la revendication 6, caractérisée en ce qu'une pièce annulaire (18) présente une portion annulaire engagée dans l'anneau élastique (19) pour le bloquer dans la gorge (20) et une nervure circulaire formant surface d'appui pour le ressort (16).

8. Charnière selon la revendication 7, caractérisée en ce que la tige (11) présente deux épaulements circulaires (14,15) près de son extrêmité solidaire du charnon (8), celui (14) qui est le plus proche du charnon (8) formant un appui pour l'anneau fendu (19), l'autre épaulement (15) formant un appui pour la portion annulaire avant l'introduction de la tige (11) dans le boîtier (10), ce dernier présentant un orifice s'ouvrant du côté du charnon, le bord (23) de cet orifice étant chanfreiné pour former une sorte d'entonnoir destiné à resserrer radialement l'anneau fendu (19) lors de l'introduction de la tige dans le boîtier.

9. Charnière selon la revendication 1, caractérisée en ce que la tige (11) présente une portion (12) de plus grand diamètre du côté du charnon, ladite pièce se présentant sous forme d'une bague (25) étant engagée sur la tige (10) pour pouvoir prendre appui contre cette portion (12) de plus grand diamètre, un épaulement (27) destiné à s'engager élastiquement dans une nervure (26) étant prévu entre la paroi interne (9) du boîtier (10) et le pourtour de cette bague (25), une face annulaire d'extrémité de cette bague (25) formant la surface d'appui pour le ressort (16).

10. Charnière selon la revendication 5, caractérisée en ce que la pièce (39) engagée dans le boîtier (10) est non - plane pour pouvoir être introduite dans celui-ci jusqu'à venir buter contre un décrochement de la paroi interne (9) du boîtier (10) prévu sensiblement à la hauteur de l'encoche, la tige (10) présentant une portion de plus grand diamètre permettant de prendre appui contre la pièce non-plane (39) pour la presser en la rendant plane pour que son bord pénètre dans ladite encoche (40).

11. Charnière selon la revendication 2, caractérisée en ce que le boîtier est formé par un alésage (9) dont l'extrêmité ouverte se termine par une nervure annulaire (43), la tige (11) portant une pièce (44) formant outil pour replier par pression ladite nervure (43) pour la déformer en direction de l'axe de l'alésage (9).

12. Charnière selon l'une des revendications précédentes, caractérisée en ce que le boîtier (35) est formé par une pièce unique présentant deux logements (9,36) longitudinaux prallèles entre eux et s'ouvrant respectivement sur les extrêmités opposées du boîtier, l'un (9) de ces logements abritant le dispositif à ressort (16), l'autre logement (36) étant destiné à recevoir une extrêmité d'une armature (37) d'une branche (38).

13. Charnière selon la revendication 1, caractérisée en ce que la pièce formant le boîtier (35) est en matière moulée.

14. Charnière selon la revendication 1, caractérisée en ce que le boîtier (10) présente une portion de surface destinée à buter contre une portion correspondante (22) de l'autre partie de charnière (2) pour déterminer la position d'ouverture normale de la branche (3).

15. Charnière selon l'une des revendications précédentes, caractérisée en ce que la paroi interne (9) du boîtier (10) est cylindrique circulaire, l'extrémité de la tige (11) située près du charnon (8) présentant un diamètre de dimension correspondant au diamètre intérieur du boîtier (10) pour pouvoir coulisser dans celui-ci, l'autre extrêmité de la tige (11) étant munie d'un collier (17) formant surface d'appui pour le ressort (16), ce collier (17) présentant un diamètre extérieur correspondant au diamètre intérieur du boîtier (10) pour pouvoir coulisser dans ce dernier.

## Claims

1. Hinge with spring for spectacle frame, comprising two knuckles (5,8), one (5) of which is intended to be fixed to the front part (2) of the frame, the other knuckle (8) being intended to be connected to a temple (1), and an elastic element for connecting the said other knuckle (8) to the temple (1), said element comprising a housing (10) extending according to a longitudinal direction with respect to the temple (1) and being open at one of its ends, a rod (11) being integral with said other knuckle (8) at one of its ends and the other end having a portion (17) with a straight section which is larger than the one of the rod and being intended to be mounted slidingly in the said housing (10), a compression spring (16) surrounding the said rod (11), one of the ends of the said spring pressing against the said portion (17), and a part (19; 25; 32; 39) surrounding the said rod (11), the said part being intended to be introduced into the said housing, to be made integral with the inner wall of the latter and to form a pressure surface for the other end of the said spring, characterized in that the said part (19; 25; 32; 39) has a straight section conformable to the one of the said housing (10) for allowing its introduction into said housing (10) according to the said longitudinal direction, the inner wall (9) of the housing (10) presenting in a plan substantially orthogonal to the said longitudinal direction an offset (20, 26, 40) in the form of a groove or a shoulder intended to work together with the said part, and in that the said part (19; 25; 32; 39) and/or the housing (10) are made of a deformable material, so that the said part and/or the housing are deformed during or after the introduction of the rod, the spring and the part all together, the deformation being such that the part being rendered integral with the said offset.

2. Hinge with spring for spectacle frame, comprising two knuckles (5,8), one (5) of which is intended to be fixed to the front part (2) of the frame, the other knuckle (8) being intended to be connected to a temple (1), and an elastic element for connecting the said other knuckle (8) to the temple (1), said element comprising a housing (10) extending according to a longitudinal direction with respect to the temple (1) and being open at one of its ends, a rod (11) being integral with said other knuckle (8) at one of its ends and the other end having a portion (17) with a straight section which is larger than the one of the rod and being intended to be mounted slidingly in the said housing (10), a compression spring (16) surrounding the said rod (11), one of the ends of the said spring pressing against the said portion (17), and a part (45) surrounding the said rod (11), the said part being intended to be introduced into the said housing, to be made integral with the wall of the latter and to form a pressure surface for the other end of the said spring, characterized in that the said part (45) has a straight section conformable to the one of the said housing for allowing its introduction into said housing (10) according to the said longitudinal direction, and in that the said housing comprises a portion (43) made in a deformable material at its open end which is intended to be deformed during the introduction of the rod (11), the spring (16) and the part (45) all together, the deformation being such that a shoulder is formed against which the said part (45) rests.

3. Hinge according to claim 2, characterized in that the offset (27) is obtained by machining.

4. Hinge according to claim 2, characterized in that the offset is obtained by deforming the inner wall (9) of the housing.

5. Hinge according to one of claims 1,3 or 4, characterized in that the inner wall of the housing has a notch (20,26) in which is engaged a portion of the said part (19,25) which is elastic.

6. Hinge according to claim 5, characterized in that the inner wall (9) of the housing is circularly cylindrical, the notch being formed by a groove (20) in this inner wall, the elastic part comprising a split elastic ring (19) engaged in said groove (20) and surrounding the rod (11).

7. Hinge according to claim 6, characterized in that an annular part (18) has an annular portion engaged in the elastic ring (19) to lock it in the groove (20) and a circular rib forming a support surface for the spring (16).

8. Hinge according to claim 7, characterized in that the rod (11) has two circular shoulders (14,15) near its end integral with the knuckle (8), the one (14) closer to the knuckle (8) forming a support for the split ring (19), the other shoulder (15) forms a support for the annular portion prior to introduction of the rod (11) in the housing (10), the latter having an orifice opening on the side of the knuckle, the edge (23) of said orifice being bevelled to form a sort of funnel intended to squeeze radially the split ring (19) when the rod is introduced into the housing.

9. Hinge according to claim 1, characterized in that the rod (11) presents a portion (12) of a larger diameter on the knuckle side, the said part having the form of a ring (25) engaged on the rod (11) to be able to support on this portion (12) of larger diameter , a shoulder (27) intended to engage elastically with a rib (26) being provided between the inner wall (9) of the housing (10) and the periphery of this ring (25), an annular end surface of this ring (25) forming the support surface of the spring (16).

10. Hinge according to claim 5, characterized in that the part (39) engaged in the housing (10) is non-flat in order to be able to be inserted in the latter until it contacts an offset in the inner wall (9) of the housing (10) provided essentially at the height of the groove, the rod (10) which has a portion of larger diameter enabling pressure to be exerted against the non-flat piece (39) to press it by making it flat, so that its edge penetrates the said groove (40).

11. Hinge according to claim 2, characterized in that the housing is formed by a bore (9), the open end of which ends in an annular rib (43), the rod (11) carrying a part (44) acting as a tool to bend by pressure said rib (43) to distort it in the direction of the axis of the bore (9).

12. Hinge according to one of the preceding claims, characterized in that the housing (35) is formed of a single part having two longitudinal and mutually parallel recesses, (9,36), opening respectively on to opposite ends of the housing, one (9) of these recesses being intended to contain the spring device (16), and the other recess being intended to receive an end of a temple (38) reinforcement (37).

13. Hinge according to claim 1, characterized in that the part forming the housing (35) is of moulded material.

14. Hinge according to claim 1, characterized in that the housing (10) has a surface portion intended to abute against a corresponding portion (22) of the other part of the hinge (2) in order to determine the normal opening position of the arm (3).

15. Hinge according to one of the preceding claims characterized in that the inner wall (9) of the housing (10) is circularly cylindrical, the end of the rod (11) located near the knuckle (8) having a diameter whose dimension corresponds to the inside diameter of the housing (10) in order to be able to slide therein, the other end of the rod being fitted with a collar (17) forming a support surface for the spring (16), said collar (17) having an outside diameter which corresponds to the inside diameter of the housing (10) in order to be able to slide in the latter.

## Patentansprüche

1. Scharnier mit Feder für Brillengestell, mit zwei Scharnierteilen (5, 8), von denen einer (5) dazu bestimmt ist, an den Vorderteil (2) des Gestells befestigt zu werden, wobei der andere Scharnierteil (8) dazu bestimmt ist, an einen Bügel (1) befestigt zu werden, und mit einem elastischen Glied zur Verbindung dieses anderen Scharnierteils (8) an den benannten Bügel (1), wobei dieses Glied ein Gehäuse (10) aufweist, das sich in Längsrichtung in Bezug auf den Bügel (1) erstreckt und an einem seiner Enden offen ist, wobei ein Stift (11) mit dem benannten anderen Scharnierteil (8) an einem seiner Enden formschlüssig verbunden ist und an seinem anderen Ende ein Teilstück (17) aufweist, dessen Querschnitt grösser ist als der des Stiftes, welcher Stift dazu bestimmt ist, gleitend in das benannte Gehäuse (10) eingebaut zu werden, wobei eine Druckfeder (16) den benannten Stift (11) umgibt und eines der Enden der benannten Feder sich auf dem benannten Teilstück (17) abstützt, und mit einem Bauteil (19; 25; 32; 39), der den benannten Stift (11) umgibt und der dazu bestimmt ist, in das benannte Gehäuse eingeführt zu werden, mit der Innenwand des letzteren fest verbunden zu werden und eine Abstützfläche für das andere Ende der benannten Feder zu bilden, dadurch gekennzeichnet, dass der benannte Bauteil (19; 25; 32; 39) einen Querschnitt aufweist, der dem des benannten Gehäuses (10) entspricht, um das Einführen in das benannte Gehäuse (10) gemäss der benannten Längsrichtung zu ermöglichen, wobei die Innenseite (9) des Gehäuses (10) in einer zur benannten Längsrichtung senkrecht stehenden Fläche einen Absatz (20, 26, 40) in Form einer Rille oder einer Schulter aufweist, die dazu bestimmt ist, mit dem benannten Bauteil zusammenzuwirken, und dass der benannte Bauteil (19; 25; 32; 39) und/oder das Gehäuse (10) aus verformbarem Material bestehen, so dass der benannte Bauteil und/oder das Gehäuse während oder nach dem Einführen von gesammthaft Stift, Feder und Bauteil verformt werden, wobei die Verformung derart ist, dass der Bauteil mit dem benannten Absatz festverbunden wird.

2. Scharnier mit Feder für Brillengestell, mit zwei Scharnierteilen (5, 8), von denen einer (5) dazu bestimmt ist, an des Vorderteil (2) des Gestells befestigt zu werden, wobei der andere Scharnierteil (8) dazu bestimmt ist, an einen Bügel (1) befestigt zu werden, und mit einem elastischen Glied zur Verbindung dieses anderen Scharnierteils (8) an den Bügel (1), wobei dieses Glied ein Gehäuse (10) aufweist, das sich in Längsrichtung in Bezug auf den Bügel (1) erstreckt und an einem seiner Enden offen ist, wobei ein Stift (11) mit dem benannten anderen Scharnierteil (8) an einem seiner Enden formschlüssig verbunden ist und an seinem anderen Ende ein Teilstück (17) aufweist, dessen Querschnitt grösser ist als der des Stiftes, welcher Stift dazu bestimmt ist, gleitend in das benannte Gehäuse (10) eingebaut zu werden, wobei eine Druckfeder (16) den benannten Stift (11) umgibt und eines der Enden der benannten Feder sich auf dem benannten Teilstück (17) abstützt, und mit einem Bauteil (45), der den benannten Stift (11) umgibt und der dazu bestimmt ist, in das benannte Gehäuse eingeführt zu werden, mit der Wand des letzteren fest verbunden zu werden und eine Abstützfläche für das andere Ende der benannten Feder zu bilden, dadurch gekennzeichnet, dass der benannte Bauteil (45) einen Querschnitt aufweist, der dem des benannten Gehäuses (10) entspricht, um das Einführen in das benannte Gehäuse (10) gemäss der benannten Längsrichtung zu ermöglichen, und dass das benannte Gehäuse an seinem offenen Ende ein Teilstück (43) aus verformbaren Material aufweist, das dazu bestimmt ist, während des Einführens von gesamthaft Stift (11), Feder (16) und Bauteil (45) verformt zu werden, wobei die Verfomung derart ist, dass eine Schulter gebildet wird, gegen welche sich der benannte Bauteil (45) abstüzt.

3. Scharnier nach Anspruch 1, dadurch gekennzeichnet, dass der Absatz (27) durch Bearbeitung erhalten wird.

4. Scharnier nach Anspruch 1, dadurch gekennzeichnet, dass der Absatz durch Verformung der Innenwand (9) des Gehäuses erhalten wird.

5. Scharnier nach einem der Ansprüche 1, 3 oder 4, dadurch gekennzeichnet, dass die Innenwand des Gehäuses eine Einkerbung (20, 26) aufweist, in welcher ein Teil des benannten Bauteils (19, 25), der elastisch ist, eingefügt ist.

6. Scharnier nach Anspruch 5, dadurch gekennzeichnet, dass die Innenwand (9) des Gehäuses zylindrisch, kreisförmig ist, wobei die Einkerbung durch eine Rille (20) dieser Innenwand gebildet wird und der elastische Bauteil einen aufgespaltenen elastischen Ring (19) umfasst, der in der Rille (20) angeordnet ist und den Stift (11) umgibt.

7. Scharnier nach Anspruch 6, dadurch gekennzeichnet, dass ein Ringteil (18) ein ringförmiges Teilstück, das in den elastischen Ring (19) eingefügt ist, um diesen in der Rille (20) zu verriegeln, und eine kreisförmige Rippe aufweist, die eine Abstützfläche für die Feder (16) bildet.

8. Scharnier nach Anspruch 7, dadurch gekennzeichnet, dass der Stift (11) zwei kreisförmige Schultern (14, 15) in der Nähe seines mit dem Scharnierteil (8) formschlüssigen Endes aufweist, wobei die sich beim Scharnierteil (8) befindende Schulter (14) ein Auflager für den aufgespaltenen Ring (19) bildet und die andere Schulter (15) ein Auflager für das ringförmige Teilstück vor dem Einführen des Stiftes (11) ins Gehäuse (10) bildet, und wobei das letzere eine zum Scharnierteil hin gerichtete Öffnung aufweist und der Rand (23) dieser Öffnung abgeschrägt ist, um eine Art von Trichter zu bilden, der dazu bestimmt ist, den aufgespaltenen Ring (19) beim Einführen des Stiftes in das Gehäuse radial zusammenzudrücken.

9. Scharnier nach Anspruch 1, dadurch gekennzeichnet, dass der Stift (11) ein Teilstück (12) mit einem auf der Seite des Scharnierteils grösseren Durchmesser aufweist, wobei der benannte als Ring (25) ausgebildete Bauteil auf dem Stift (10) aufgesetzt ist, um sich auf dieses Teilstück (12) von grösserem Durchmesser abzustützen, wobei eine Schulter (27), die dazu bestimmt ist, sich elastisch in ein Rippe (26) zu fügen, zwischen der Innenwand (9) des Gehäuses (10) und dem äusseren Umfang diese Rings (25) vorgesehen ist, und wobei eine ringförmige Endfläche dieses Rings (25) eine Abstützfläche für die Feder (16) bildet.

10. Scharnier nach Anspruch 5, dadurch gekennzeichnet, dass der in das Gehäuse (10) eingefügte Bauteil (39) nicht flach ist, um in dieses eingeführt zu werden bis er gegen einen merklich auf der Höhe der Einkerbung vorgesehenen Absatz der Innenwand (9) des Gehäuses (10) stösst, wobei der Stift (11) ein Teilstück von grösserem Durchmesser aufweist, das es ermöglicht, sich auf den nicht flachen Bauteil (39) abzustützen, um diesen unter Druck flach zu machen, so dass sein Rand in die benannte Einkerbung (40) eindringt.

11. Scharnier nach Anspruch 2, dadurch gekennzeichnet, dass das Gehäuse durch eine Bohrung (9) gebildet wird, deren offenes Ende durch eine ringförmige Rippe (43) beendet ist, wobei der ein Stück (44) tragende Stift (11) ein Werkzeug bildet, um die benannte Rippe (43) unter Druck zu biegen, so dass sie in Richtung der Achse der Bohrung (9) verformt wird.

12. Scharnier nach einem der vorhergehenden Ansprüche, dadurch gekennzeichnet, dass das Gehäuse (35) durch ein einziges Stück gebildet wird, das zwei unter sich parallele Längsbohrungen (9, 36) aufweist, die sich auf respektiv entgegengesetzten Enden des Gehäuses öffnen, wobei eine dieser Bohrungen (9) die Federvorrichtung (16) aufnimmt und die andere Bohrung (36) dazu bestimmt ist, das Ende einer Armatur (37) eines Bügels (38) aufzunehmen.

13. Scharnier nach Anspruch 1, dadurch gekennzeichnet, dass das das Gehäuse (35) bildende Stück aus einem gegossenen Stoff besteht.

14. Scharnier nach Anspruch 1, dadurch gekennzeichnet, dass das Gehäuse (10) einen Flächenteil aufweist, der dazu bestimmt ist, gegen einen entsprechenden Teil (22) des anderen Scharnierteils (2) zu stossen, um die normale Öffnungslage des Bügels (3) zu bestimmen.

15. Scharnier nach einem der vorhergehenden Ansprüche, dadurch gekennzeichnet, dass die Innenwand (9) des Gehäuses (10) zylindrisch kreisförmig ist, wobei das beim Scharnierteil (8) liegende Ende des Stiftes (11) einen Durchmesser mit Dimensionen aufweist, die dem Innendurchmesser des Gehäuses (10) entsprechen, um in diesem gleiten zu können, wobei das andere Ende des Stiftes (11) mit einem Flansch (17) versehen ist, der eine Abstützfläche für die Feder (16) bildet, und wobei dieser Flansch (17) einen Aussendurchmesser aufweist, der dem Innendurchmesser des Gehäuses (10) entspricht, um im letzteren gleiten zu können.
